(19)

Europäisches
Patentamt
European
Patent Office
Office européen
des brevets

(11) **EP 2 600 564 A2**

(12) **EUROPEAN PATENT APPLICATION**

(43) Date of publication:
**05.06.2013 Bulletin 2013/23**

(51) Int Cl.:
**H04L 12/10** (2006.01)     **H04L 12/46** (2006.01)

(21) Application number: **12005846.6**

(22) Date of filing: **13.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.12.2011 US 201113310679**

(71) Applicant: **Broadcom Corporation**
**Irvine, CA 92617 (US)**

(72) Inventor: **Maniktata, Sanjaya**
**Fremont, CA 94536 (US)**

(74) Representative: **Jehle, Volker Armin et al**
**Bosch Jehle Patentanwaltsgesellschaft mbH**
**Flüggenstrasse 13**
**80639 München (DE)**

(54) **System and method for long range power over ethernet using integrated boost repeaters**

(57)     A system and method for long range power over Ethernet (PoE) using integrated boost repeaters. The integrated boost repeater includes a boost converter module that boosts a voltage level received by a powered device on a first port of the integrated boost repeater to a second voltage level that is applied by a power source equipment to a second port of the integrated boost repeater. In one embodiment, the boost converter module boosts the voltage to a level that is greater than a voltage level output by an originating power source equipment.

*FIG. 1*

EP 2 600 564 A2

## Description

## BACKGROUND

### Field of the Invention

The present invention relates generally to network powering systems and methods and, more particularly, to a system and method for long range power over Ethernet (PoE) using integrated boost repeaters.

### Introduction

PoE provides a framework for delivery of power from power sourcing equipment (PSE) to a powered device (PD) over Ethernet cabling. Various types of PDs exist, including voice over IP (VoIP) phones, wireless LAN access points, Bluetooth access points, network cameras, computing devices, etc.

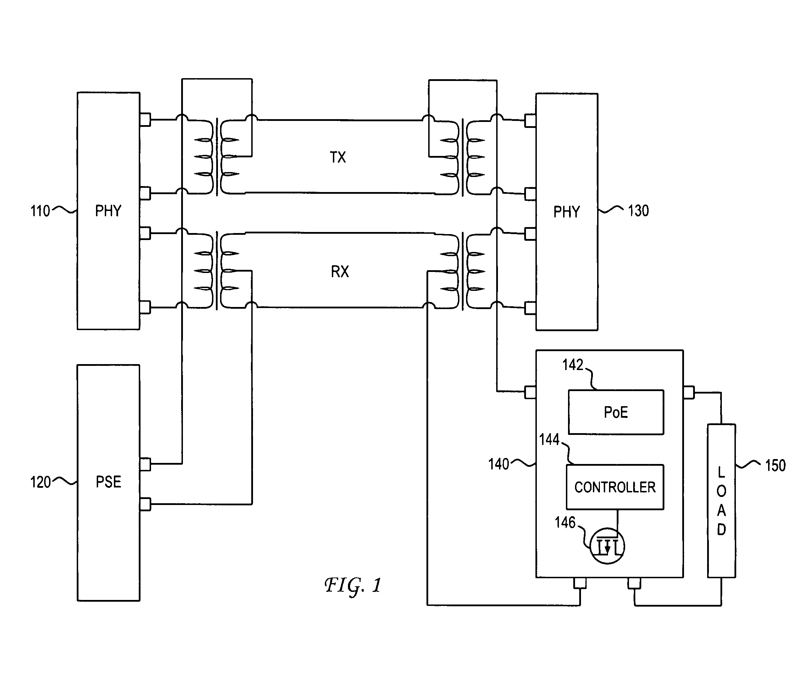

FIG. 1 illustrates an example of a conventional power over Ethernet (PoE) system. As illustrated, the PoE system includes PSE 120 that transmits power to powered device (PD) 140 over two wire pairs. Power delivered by PSE 120 to PD 140 is provided through the application of a voltage across the center taps of a first transformer that is coupled to a transmit (TX) wire pair and a second transformer that is coupled to a receive (RX) wire pair carried within an Ethernet cable.

As is further illustrated in FIG. 1, PD 140 includes PoE module 142. PoE module 142 includes the electronics that would enable PD 140 to communicate with PSE 120 in accordance with a PoE specification such as IEEE 802.3af (PoE), 802.3at (PoE Plus), legacy PoE transmission, or any other type of PoE transmission. PD 140 also includes controller 144 (e.g., pulse width modulation DC:DC controller) that controls power FET 146, which in turn provides constant power to load 150.

In general, PoE was defined for Ethernet applications that had cable lengths of a 100 meters or less. Long range Ethernet (i.e., cable lengths greater than 100 meters) presents new challenges in delivering power via the network. What is needed therefore is a mechanism that enables an efficient delivery of power over long cable spans.

## SUMMARY

A system and/or method for long range power over Ethernet using integrated boost repeaters, substantially as shown in and/or described in connection with at least one of the figures, as set forth more completely in the claims.

According to an aspect, a power over Ethernet repeater is provided inserted between two cable segments used in a network connection between an originating power source equipment and a terminating powered device, comprising:

a powered device module that receives power on a first port of said power over Ethernet repeater that is coupled to an upstream power source equipment via a first cable segment, said power received on said first port having a first voltage level;
a boost converter module that is configured to boost said first voltage level received on said first port to a second voltage level higher than said first voltage level for application to a second port of said power over Ethernet repeater; and
a power sourcing equipment that is configured to apply said second voltage level onto said second port for delivery to a downstream powered device that is coupled to said second port via a second cable segment.

Advantageously, said boost converter module boosts said first voltage level to a level that is higher than a voltage level output by said originating power source equipment.

Advantageously, said originating power source equipment delivers power to said terminating powered device via one cable pair.

Advantageously, said originating power source equipment delivers power to said terminating powered device via two cable pairs.

Advantageously, said originating power source equipment delivers power to said terminating powered device via four cable pairs.

Advantageously, said first and second cable segments are less than 100 meters.

According to an aspect, a method is provided in a power over Ethernet repeater that is inserted between two cable segments used in a network connection between an originating power source equipment and a terminating powered device, comprising:

receiving power by a powered device module on a first port of said power over Ethernet repeater that is coupled to an upstream power source equipment via a first cable segment, said power received on said first port having a first voltage level;
boosting by a boost converter module said first voltage level received on said first port to a second voltage level higher than said first voltage level for application to a second port of said power over Ethernet repeater; and
transmitting power by a power sourcing equipment at said second voltage level onto said second port for delivery to a downstream powered device that is coupled to said second port via a second cable segment.

Advantageously, said boosting comprises boosting said first voltage level to a level that is higher than a voltage level output by said originating power source equipment.

Advantageously, said originating power source equipment delivers power to said terminating powered device via one cable pair.

Advantageously, said originating power source equipment delivers power to said terminating powered device via two cable pairs.

Advantageously, said originating power source equipment delivers power to said terminating powered device via four cable pairs.

Advantageously, said first and second cable segments are less than 100 meters.

According to an aspect, a power over Ethernet repeater is provided inserted between two cable segments used in a network connection between an originating power source equipment and a terminating powered device, comprising:

a boost converter module that is configured to boost a first voltage level received by a powered device on a first port in said power over Ethernet repeater to a second voltage level higher than said first voltage level for application by a power source equipment to a second port of said power over Ethernet repeater for delivery to a downstream powered device that is coupled to said second port via a second cable segment.

Advantageously, said boost converter module boosts said first voltage level to a level that is higher than a voltage level output by said originating power source equipment.

Advantageously, said originating power source equipment delivers power to said terminating powered device via one cable pair.

Advantageously, said originating power source equipment delivers power to said terminating powered device via two cable pairs.

Advantageously, said originating power source equipment delivers power to said terminating powered device via four cable pairs.

Advantageously, said first and second cable segments are less than 100 meters.

**BRIEF DESCRIPTION OF THE DRAWINGS**

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered limiting of its scope, the invention will be described and explained with additional specificity and detail through the use of the accompanying drawings in which:

FIG. 1 illustrates an embodiment of a power over Ethernet system.

FIG. 2 illustrates an example configuration of a long-range Ethernet connection.

FIGS. 3A and 3B illustrate a circuit diagram that models the power over Ethernet system.

FIGS. 4A and 4B illustrate real solutions that are available for the delivery of power to a powered device.

FIG. 5 illustrates an embodiment of a boost repeater station according to the present invention.

FIG. 6 illustrates an application of boost repeater stations to a long range Ethernet application.

FIGS. 7A and 7B illustrate real solutions that are available for the delivery of power to a powered device using integrated boost repeaters.

**DETAILED DESCRIPTION**

Various embodiments of the invention are discussed in detail below. While specific implementations are discussed, it should be understood that this is done for illustration purposes only. A person skilled in the relevant art will recognize that other components and configurations may be used without parting from the spirit and scope of the invention.

For long-range Ethernet, repeater stations (or Ethernet extenders) can be used to enhance the reach of data transmissions beyond the conventional 100 meter range. Where PoE is implemented by the repeater stations, the repeater stations can also be self powered. Here, the repeater station can include a PD that extracts power, provides some of that power for the extender circuitry, and sends the rest of the available power down the network cable to another repeater station or PD using a PSE. In one example, the long-range Ethernet connection can be broken up into multiple 100 meter cable segments that are coupled using a repeater station.

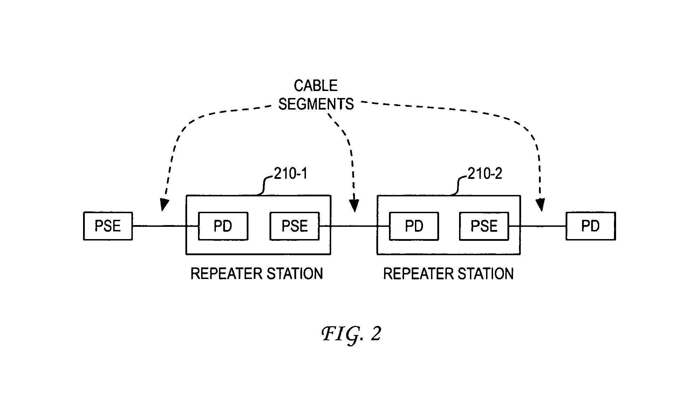

FIG. 2 illustrates an example of such a long-range configuration. As illustrated, the repeater stations 210-1, 210-2 divide the long-range Ethernet connection into multiple cable segments. Each repeater station includes a PD that receives power from an upstream PSE, and a PSE that transmits the remainder of the received power to the downstream PD. In one example, the multiple cable segments are each 100 meters or less. As would be appreciated, the number of cable segments and the length of the individual segments can vary for a given long-range configuration.

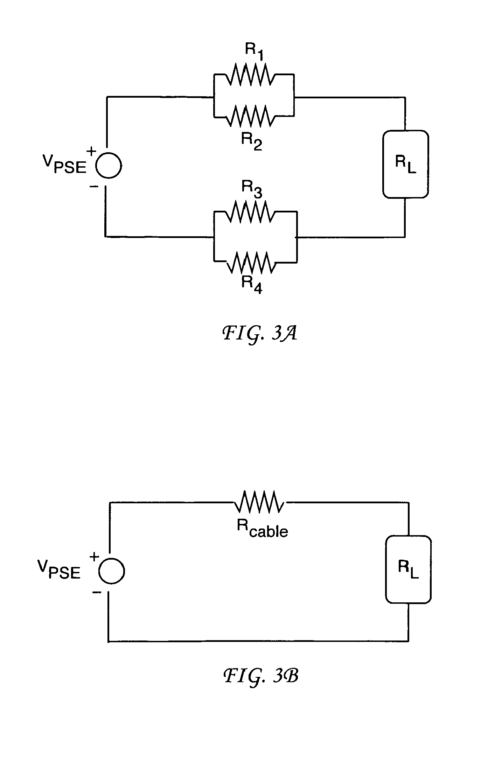

In general, the delivery of power from the PSE to a load of a PD can be modeled by the circuit model illustrated in FIG. 3A. As illustrated, a power source provides a voltage $V_{PSE}$ to a circuit that includes a first parallel pair of resistors ($R_1$, $R_2$), a load resistance $R_{LOAD}$, and a second parallel pair of resistors ($R_3$, $R_4$). Here, the first parallel pair of resistors $R_1$, $R_2$ represents the resistances of the TX pair of wires, while the second parallel pair of resistors $R_3$, $R_4$ represents the resistances of the RX pair of wires.

The values of resistors $R_1$, $R_2$, $R_3$, and $R_4$ depend on the type and length of network cable. For

example, the resistors $R_1$, $R_2$, $R_3$, and $R_4$ can have a certain resistance/length that is dependent on a type of Ethernet cable (e.g., Category 3, 5, 6, etc.). A simplified PoE circuit model that includes the single cable resistance value $R_{cable}$ is illustrated in FIG. 3B.

In the present invention, it is recognized that conventional IEEE-compliant PDs have an undervoltage lockout (UVLO) of approximately 30V. In general, if the voltage at the end of the cable at the PD fails to reach 30V, the PD would not be allowed to power up. This would be true even if enough power (V × I) would actually be available to the PD at the end of the cable.

In applying PoE to long-range Ethernet applications, the UVLO restriction can significantly compromise the usability of PoE. To illustrate the UVLO impact, consider the circuit illustrated in FIG. 3B. In this circuit, the $V_{PSE}$ = i * ($R_{cable}$ + $R_{load}$). As $R_{load}$ = $P_{PD}/i^2$, the previous equation can be rewritten in the form $i^2 * R_{cable} - i * V + P_{out} = 0$. The solutions for the current can then be written as follows:

$$ i = \frac{V - \sqrt{V^2 - 4 * R_{cable} * P_{PD}}}{2 * R_{cable}} $$

Based on this equation, it is apparent that the amount of PoE power that can be sent down a network cable is limited by basic physics. Here, no real solution exists if the power ($P_{PD}$) that is extracted at the end of the long-range network cable exceeds $V^2/(4 * R_{cable})$.

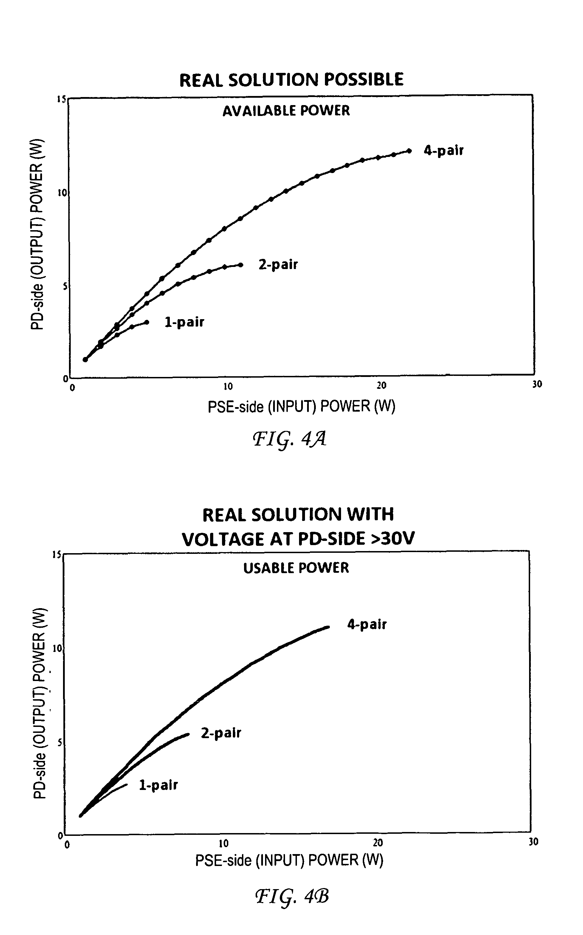

For example, consider the use of a 1000 meters of AWG24 cable in standard 2-pair PoE. At a 60°C, the resistance of the cable would be 95.48 $\Omega$. At this resistance, the maximum PD power assuming a 48V PSE source is $P_{PD} \leq V^2/(4 * R_{cable})$ = $48^2/(4 * 95.48\ \Omega)$ = 6.033W. FIG. 4A illustrates the range of real solutions that are available for various 1-pair, 2-pair, and 4-pair powering scenarios assuming 1000 meters of A WG24 cable.

Significantly, the calculations illustrated in the possible real solutions of FIG. 4A did not consider the constraints represented by a UVLO of 30V. Specifically, when the current that is calculated for power slightly less than the above 6.033W is 0.234A, the voltage drop across the long-range cable is 0.234A * 95.48$\Omega$ = 22.34V. Thus, the voltage at the PD-side is 48V-22.34V = 25.66V. Since this 25.66V seen at the PD is below the UVLO of 30V, the PD would not be allowed to power up and the theoretical 6.033W of available power would not be usable. In fact, the UVLO of 30V would require that the power be derated to about 5W so that the voltage at the PD-side would remain above the UVLO of 30V.

The impact of such derating is illustrated in FIG. 4B, which graphs the possible real solutions of power usable at the PD when constrained by the UVLO of 30V. As illustrated, the real solutions of the usable power illustrated in FIG. 4B represents a subset of the real solutions of the available power illustrated in FIG. 4A.

The present invention seeks to remove the constraints that are evident in conventional long-range PoE applications by modifying the repeater stations that separate the long-range cable. In this context, it is a feature of the present invention that no modifications of commercial IEEE-compliant PDs at the end of the long-range cable would be required. This would enhance the usability of the existing base of installed PDs.

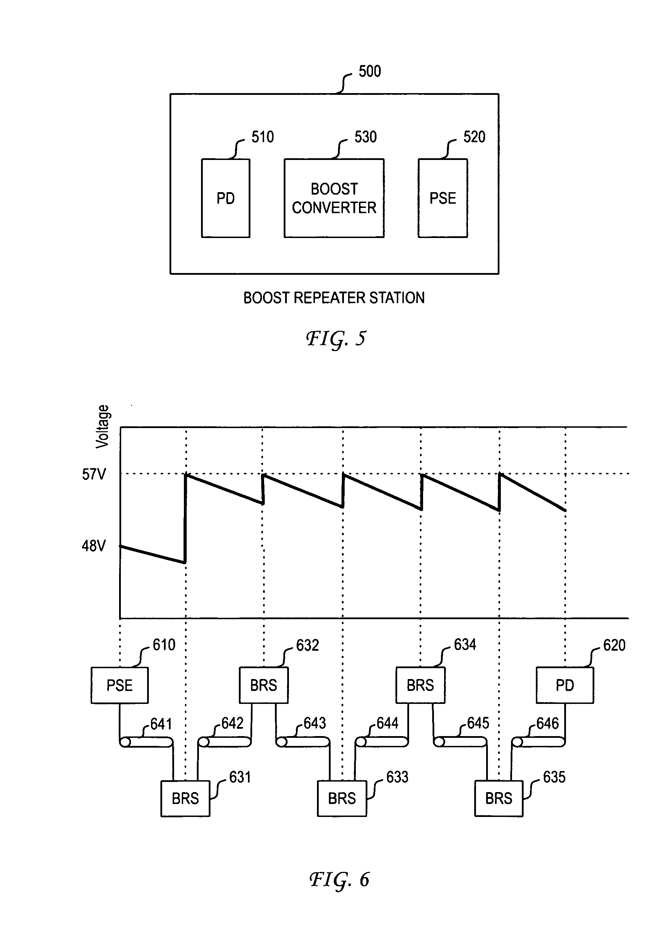

An embodiment of a boost repeater station of the present invention is illustrated in FIG. 5. As illustrated, boost repeater station 500 includes PD 510, PSE 520 and DC-DC boost converter 530. Here, boost converter 530 can be designed to boost the voltage, which can thereby lower the current and the cable losses. In one embodiment, boost converter 530 can be designed to boost the voltage received by PD 510 from an upstream PSE to 57V for output at PSE 520 to a downstream PD.

The operation of boost converter 530 in a long-range PoE application is illustrated in FIG. 6. As illustrated, the long-range cable that couples PSE 610 to PD 620 is broken into a plurality of cable segments 641-646. Adjacent cable segments are connected together via a boost repeater station (BRS). As illustrated, PSE 610 outputs an initial output voltage of 48V onto the first cable segment 641. In the voltage graph that charts the voltage level along the length of the cable, the initial 48V output gradually diminishes along the length of the first cable segment 641 until it reaches the first BRS 631.

At BRS 631, the boost converter module would then boost the voltage to 57V, which is then applied as an output voltage onto cable segment 642 by the PSE contained within BRS 631. This 57V output in turn would gradually diminish along the length of the second cable segment 642 until it reaches the second BRS 632. At that point, BRS 632 would boost the voltage back to 57V, which is then applied as an output voltage onto cable segment 643 by the PSE contained within BRS 632. As illustrated, this boosting process would continue at BRS 633, 634 and 635 in applying a boosted voltage to cable segments 644, 645, and 646, respectively. The end result of the voltage boosting at BRS 631-635 is a voltage received at PD 620 that is significantly higher than the UVLO of 30V.

The benefits of boosting the voltage at the boost repeater station are significant. The simple benefits of boosting the voltage are that current decreases, and since losses in the cable are dependent on $i^2 * R_{cable}$, then cable losses are reduced.

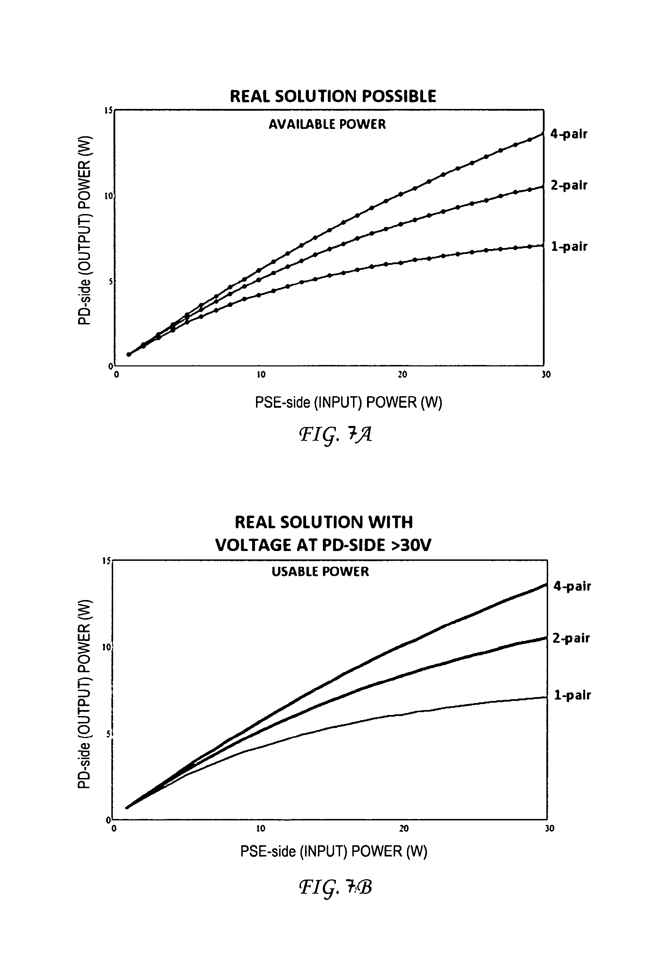

FIGS. 7A and 7B illustrate the impact of boost-stage repeaters on the real solutions of usable and available power, respectively, even assuming that the boost converter efficiency is taken at 95%. As illustrated, boosting the voltage enables the system to almost double the available power at the end of the long-range cable. For example, for 2-pair operation, the usable power level at the end of the 1000 meter cable has gone up from a little over 5W (with no boost repeaters) to about 11W (with boost repeaters). Moreover, no constraint on the available power that is actually usable at PD 620 would exist. This can be achieved because the use of a boost converter effectively removes the limitation that $P_{PD} \leq V^2/(4 * R_{cable})$.

Here, it should be noted that while the above description used the example of boosting the voltage to 57V, the principles of the present invention are not limited to such an example. As would be appreciated, the particular voltage used by a repeater station would be implementation dependent in maintaining a voltage level that is sufficient to remove the limitation that $P_{PD} \leq V^2/(4 * R_{cable})$.

These and other aspects of the present invention will become apparent to those skilled in the art by a review of the preceding detailed description. Although a number of salient features of the present invention have been described above, the invention is capable of other embodiments and of being practiced and carried out in various ways that would be apparent to one of ordinary skill in the art after reading the disclosed invention, therefore the above description should not be considered to be exclusive of these other embodiments. Also, it is to be understood that the phraseology and terminology employed herein are for the purposes of description and should not be regarded as limiting.

**Claims**

1. A power over Ethernet repeater inserted between two cable segments used in a network connection between an originating power source equipment and a terminating powered device, comprising:

   a powered device module that receives power on a first port of said power over Ethernet repeater that is coupled to an upstream power source equipment via a first cable segment, said power received on said first port having a first voltage level;
   a boost converter module that is configured to boost said first voltage level received on said first port to a second voltage level higher than said first voltage level for application to a second port of said power over Ethernet repeater; and
   a power sourcing equipment that is configured to apply said second voltage level onto said second port for delivery to a downstream powered device that is coupled to said second port via a second cable segment.

2. The power over Ethernet repeater of claim 1, wherein said boost converter module boosts said first voltage level to a level that is higher than a voltage level output by said originating power source equipment.

3. The power over Ethernet repeater of claim 1, wherein said originating power source equipment delivers power to said terminating powered device via one cable pair.

4. The power over Ethernet repeater of claim 1, wherein said originating power source equipment delivers power to said terminating powered device via two cable pairs.

5. The power over Ethernet repeater of claim 1, wherein said originating power source equipment delivers power to said terminating powered device via four cable pairs.

6. The power over Ethernet repeater of claim 1, wherein said first and second cable segments are less than 100 meters.

7. A method in a power over Ethernet repeater that is inserted between two cable segments used in a network connection between an originating power source equipment and a terminating powered device, comprising:

   receiving power by a powered device module on a first port of said power over Ethernet repeater that is coupled to an upstream power source equipment via a first cable segment, said power received on said first port having a first voltage level;
   boosting by a boost converter module said first voltage level received on said first port to a second voltage level higher than said first voltage level for application to a second port of said power over Ethernet repeater; and
   transmitting power by a power sourcing equipment at said second voltage level onto said second port for delivery to a downstream powered device that is coupled to said second port via a second cable segment.

8. The method of claim 7, wherein said boosting comprises boosting said first voltage level to a level that is higher than a voltage level output by said originating power source equipment.

9. The method of claim 7, wherein said originating power source equipment delivers power to said terminating powered device via one cable pair.

10. The method of claim 7, wherein said originating power source equipment delivers power to said terminating powered device via two cable pairs.

11. The method of claim 7, wherein said originating power source equipment delivers power to said terminating powered device via four cable pairs.

**12.** The method of claim 7, wherein said first and second cable segments are less than 100 meters.

**13.** A power over Ethernet repeater inserted between two cable segments used in a network connection between an originating power source equipment and a terminating powered device, comprising:

a boost converter module that is configured to boost a first voltage level received by a powered device on a first port in said power over Ethernet repeater to a second voltage level higher than said first voltage level for application by a power source equipment to a second port of said power over Ethernet repeater for delivery to a downstream powered device that is coupled to said second port via a second cable segment.

**14.** The power over Ethernet repeater of claim 13, wherein said boost converter module boosts said first voltage level to a level that is higher than a voltage level output by said originating power source equipment.

**15.** The power over Ethernet repeater of claim 13, wherein said originating power source equipment delivers power to said terminating powered device via one cable pair.

*FIG. 1*

*FIG. 2*

*FIG. 3A*

*FIG. 3B*

## REAL SOLUTION POSSIBLE

*FIG. 4A*

## REAL SOLUTION WITH
## VOLTAGE AT PD-SIDE >30V

*FIG. 4B*

BOOST REPEATER STATION

*FIG. 5*

*FIG. 6*

## REAL SOLUTION POSSIBLE

FIG. 7A

## REAL SOLUTION WITH
## VOLTAGE AT PD-SIDE >30V

FIG. 7B